# EUROPEAN PATENT APPLICATION

(11) **EP 1 631 092 A2**
(43) Date of publication of application: **01.03.2006**
(21) Application number: 05016346.8
(22) Date of filing: 27.07.2005
(51) Int. Cl.: H04N 9/31

(54) **Method of illuminating a light valve with an overdriving of the light source**

(30) Priority: 23.08.2004 US 923020
(71) Applicant: Hewlett-Packard Development Company, Houston, Texas 77070 (US)
(72) Inventor: Kuo, Huei Pei, Cupertino CA 95014 (US); Kuramoto, Akinobu, Pleasanton CA 94566 (US)
(74) Representative: Schoppe, Fritz

(57) **Abstract**

A method (80) of illuminating a light valve (2, 39, 46) using a light source (10) having a nominal power dissipation level. In the method, power is supplied to the light source (10) to generate light and illuminate the spatial light modulator (4, 40) through the light input (103). During an initial portion of an illumination period of each colorband period, the power supplied to the light source (10) is increased to an overdrive level (107a-107c, 107a'-107c' 119a-119c, 119a'-119c') above a nominal power dissipation level. In addition, the power supplied to the light source (10) is decreased following the initial portion of each colorband period in the illumination period to thereby increase the intensity of the light source (10) during the initial portions of the illumination periods of each colorband period and maintain a substantially uniform light output throughout the colorband periods.

## Description

### BACKGROUND OF THE INVENTION

A need exists for various types of video and graphics display devices with improved performance and lower cost. For example, a need exists for miniature video and graphics display devices that are small enough to be integrated into a helmet or a pair of glasses so that they can be worn by the user. Such wearable display devices would replace or supplement the conventional displays of computers and other devices. A need also exists for a replacement for the conventional cathode-ray tube used in many display devices including computer monitors, conventional and high-definition television receivers and large-screen displays. Both of these needs can be satisfied by display devices that incorporate a light valve that uses as its light control element a spatial light modulator. Spatial light modulators are typically based on liquid crystal material, but may also be based on arrays of moveable mirrors.

Liquid crystal-based spatial light modulators are available in either a transmissive form or in a reflective form. The transmissive spatial light modulator is composed of a layer of a liquid crystal material sandwiched between two transparent electrodes. The liquid crystal material can be either ferroelectric or nematic type. Typically, the two electrodes are segmented in an orthogonal fashion to form a two-dimensional array of pixels.

The direction of an electric field applied between each pixel electrode and the other electrode determines whether or not the corresponding pixel of the transmissive spatial light modulator rotates the direction of polarization of light falling on the pixel. The transmissive spatial light modulator is constructed as a half-wave plate and rotates the direction of polarization through 90° so that the polarized light transmitted by the pixels of the spatial light modulator either passes through a polarization analyzer or is absorbed by the polarization analyzer, depending on the direction of the electric field applied to each pixel.

Reflective liquid crystal-based spatial light modulators are similar in construction to transmissive liquid crystal-based spatial light modulators, but use reflective pixel electrodes and have the advantage that they do not require a transparent substrate. Accordingly, reflective spatial light modulators can be built on a silicon substrate that also accommodates the drive circuits that derive the drive signals for the pixel electrodes from the input video signal. A reflective light valve has the advantage that its pixel electrode drive circuits do not partially occlude the light modulated by the pixel. This enables a reflective light valve to have a greater light throughput than a similar-sized transmissive light valve and allows larger and more sophisticated drive circuits to be incorporated.

As with the transmissive spatial light modulators, the direction of an electric field (in this case between the transparent electrode and the reflective electrode) determines whether or not the corresponding pixel of the reflective spatial light modulator rotates through 90° the direction of polarization of the light falling on (and reflected by) by the pixel. Thus, the polarized light reflected by the pixels of the reflective spatial light modulator either passes through a polarization analyzer or is absorbed by the polarization analyzer, depending on the direction of the electric field applied to each pixel. The resulting optical characteristics of each pixel of both the transmissive and reflective spatial light modulators are binary: each pixel either transmits light (its 1 state) or absorbs light (its 0 state), and therefore appears light or dark, depending on the direction of the electric field.

To produce the grayscale required for conventional display devices, the apparent brightness of each pixel is varied by temporally modulating the light transmitted/reflected by each pixel. The light is modulated by defining a basic time period that will be called the illumination period of the spatial light modulator. The pixel electrode is driven by a drive signal that switches the pixel from its 1 state to its 0 state. The duration of the 1 state relative to the duration of the illumination period determines the apparent brightness of the pixel.

Liquid crystal based light valves often have a native gray level capability. The gray levels are typically achieved based upon the applied voltage. However, they are typically too slow to use pulse width modulation to achieve gray levels. The micro-mirror type light valves typically operate in binary fashion and temporal modulation to achieve gray levels.

Ferroelectric liquid crystal-based spatial light modulators suffer the disadvantage that, after each time the drive signal has been applied to a pixel electrode to cause the pixel to modulate the light either transmitted/reflected by it, the DC balance of the pixel must be restored. This is typically done by defining a second basic time period called the balance period, equal in duration to the illumination period, and driving the pixel electrode with a complementary drive signal (reverse representation) having 1 state and 0 state durations that are complementary to the 1 state and 0 state durations of the drive signal (positive representation) during the illumination period. The illumination period and the balance period collectively constitute a display period.

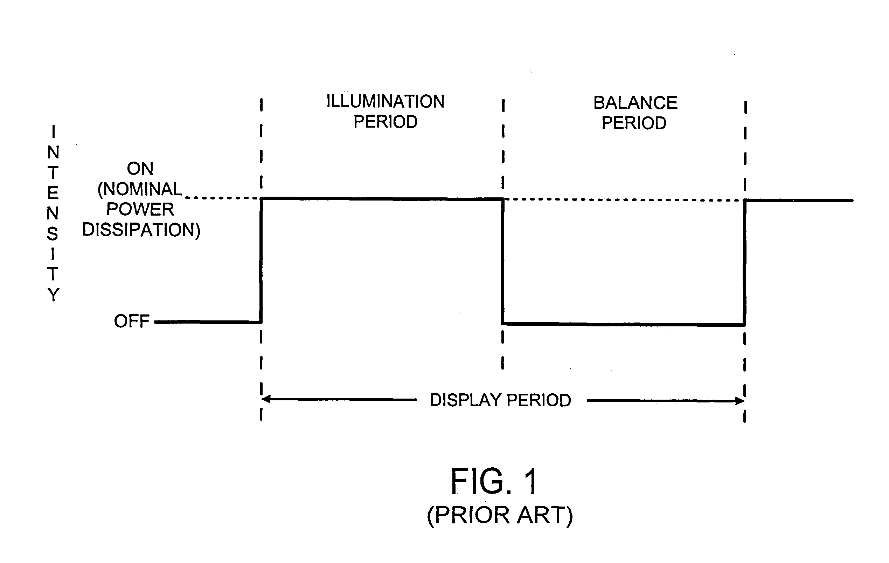

To prevent the complementary drive signal from causing the display device to display a substantially uniform, grey image, the light source illuminating the light valve is modulated, either directly or with a shutter, so that the light valve is only illuminated during the illumination period, and is not illuminated during the balance period, as depicted in FIG. 1. However, modulating the light source as just described reduces the light throughput of the light valve to about half of that which could be achieved if DC balance restoration were unnecessary. This means that a light source of approximately twice the intensity, with a corresponding increase in cost, is necessary to achieve a given display brightness for ferroelectric liquid crystal-based spatial light modulators. Additionally or alternatively, projection optics with a greater aperture, also with a corresponding increase in cost, are necessary to achieve a given brightness.

To produce color output required for conventional display devices, a single spatial light modulator may be used or multiple spatial light modulators may be used. In order to produce a color output from a single spatial light modulator, the spatial light modulator is illuminated sequentially with light of different colors, typically red, blue, and green. This sequential illumination may be accomplished using multiple light sources, each having one of the desired illumination colors, or by using a "white" light source with sequential color filtering. For purposes of this description a "white" light source is one that emits light over a broad portion of the visible light spectrum. In either case, each of the sequential colors is modulated individually by the spatial light modulator to produce three sequential single-color images. If the sequence of single-color images occur quickly enough, a viewer of the sequential single-color images will be unable to distinguish the sequential single-color images from a full-color image.

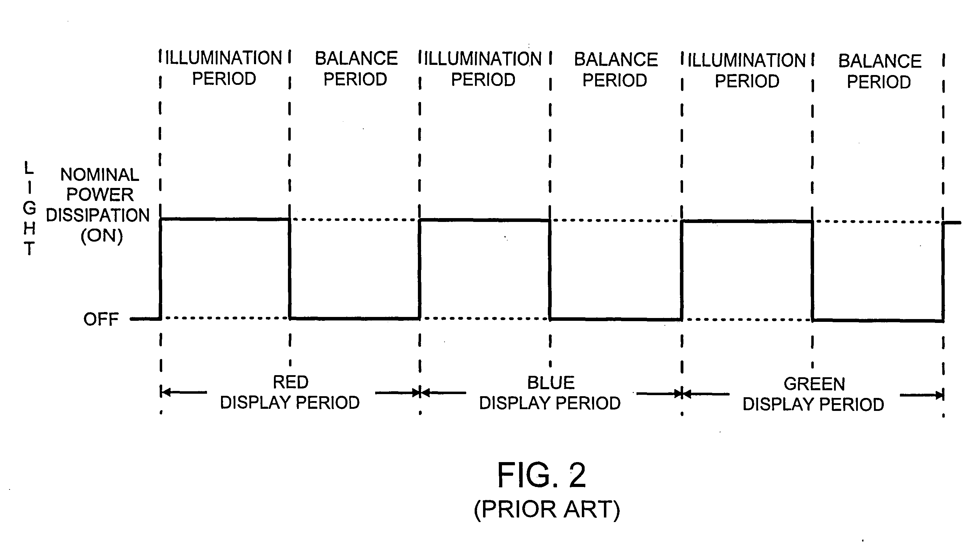

When the single spatial light modulator used to produce color output is a ferroelectric liquid crystal-based spatial light modulator, DC balance must be restored, as previously discussed. Typically, DC balance is restored after each of the sequential colored illuminations as depicted in FIG. 2. Modulating the light source in this manner reduces the light throughput of the light valve to about half of that which could be achieved if DC balance restoration were unnecessary.

To produce color output using multiple spatial light modulators, each of the spatial light modulators is simultaneously illuminated with a different colored light. This can be accomplished using multiple light sources, each having one of the desired illumination colors, or by using a "white" light source with a color separator. Typically three spatial light modulators are used, one illuminated with red light, one with blue light, and one with green light. Each of the spatial light modulators modulates the colored light that illuminates it to form a single-colored image, and the single-colored images from each of the spatial light modulators are combined into a single full-color image.

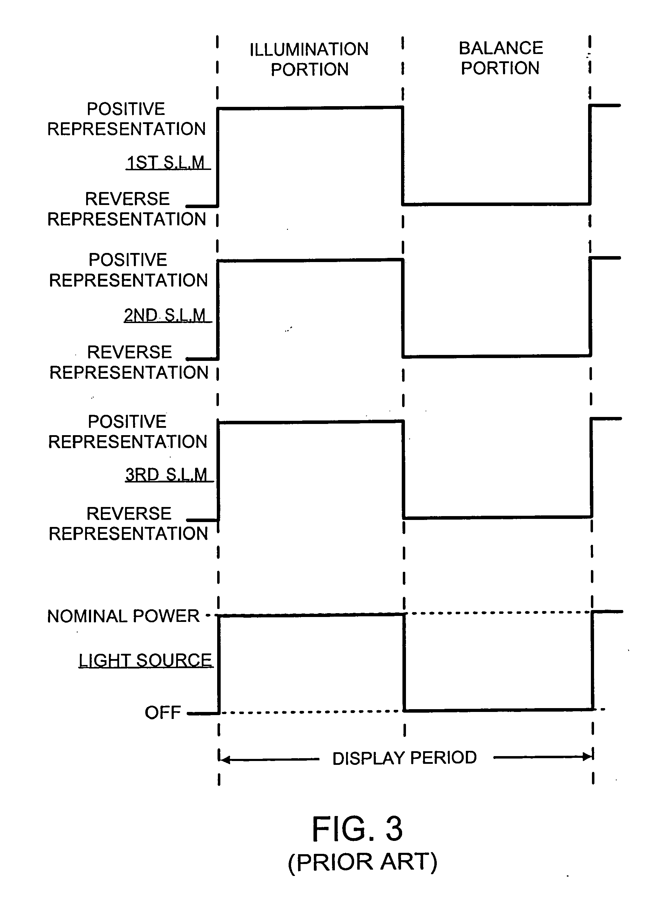

When the three spatial light modulators used to produce color output are ferroelectric liquid crystal-based spatial light modulators, DC balance of each of the spatial light modulators must be restored. Typically, DC balance is restored simultaneously to each of the spatial light modulators (S.L.M.s) after a simultaneous illumination period, as depicted in FIG. 3. Modulating the light source in this manner, once again, reduces the light throughput of the light valve to about half of that which could be achieved if DC balance restoration were unnecessary.

### SUMMARY OF THE INVENTION

A method of illuminating a light valve using a light source having a nominal power dissipation level is provided. The light valve includes a light input, a light output, a spatial light modulator having an array of pixels, a color sequencer for sequentially selecting one of a first, a second, and a third colorband of light. In the method, power is supplied to the light source to generate light and illuminate the spatial light modulator through the light input. During an initial portion of an illumination period of each colorband period, the power supplied to the light source is increased to an overdrive level above a nominal power dissipation level. In addition, the power supplied to the light source is decreased following the initial portion of each colorband period in the illumination period to thereby increase the intensity of the light source during the initial portions of the illumination periods of each colorband period and maintain a substantially uniform light output throughout the colorband periods.

### BRIEF DESCRIPTION OF THE DRAWINGS

Features of the present invention will become apparent to those skilled in the art from the following description with reference to the figures, in which:
FIG. 1 illustrates the modulation of a light source in a conventional ferroelectric liquid crystal-based light valve;
FIG. 2 illustrates the modulation of a light source in a conventional ferroelectric liquid crystal-based light valve with sequential color illumination such as those shown in FIGS. 4A-6;
FIG. 3 illustrates the modulation of a light source in a conventional ferroelectric liquid crystal-based light valve with three spatial light modulators such as those shown in FIGS. 7-9;
FIG. 4A is a schematic diagram of part of a display device incorporating a transmissive light valve with a single spatial light modulator;
FIG. 4B is a front view of a color sequencer like that depicted in FIG. 4A;
FIG. 5 is a schematic diagram of a part of a display device incorporating a reflective light valve with a single spatial light modulator;
FIG. 6 is a schematic diagram of a part of a display device incorporating a reflective light valve with a single spatial light modulator and a beam splitter;
FIG. 7 is a schematic diagram of a part of a display device incorporating a reflective light valve with three spatial light modulators and dichroic plates;
FIG. 8 is a schematic diagram of a part of a display device incorporating a reflective light valve with three spatial light modulators and a color separation cube;
FIG. 9 is a schematic diagram of a part of a display device incorporating a reflective light valve with three spatial light modulators and a three-prism color separator;
FIG. 10A illustrates the modulation power, current or voltage, supplied to a light source in a ferroelectric liquid crystal-based light valve with sequential color illumination such as those shown in FIGS. 4A-6;
FIG. 10B illustrates the light output associated with the modulation power supplied in FIG. 10A;
FIG. 11 illustrates the illumination of a light valve with three spatial light modulators.and a color separator such as those shown in FIGS. 7-9;
FIG. 12 illustrates a flow diagram of an operational mode for illumination a light valve in one colorband display period according to an embodiment
FIG. 13A illustrates an example of a waveform of a modulation power, voltage or current, supplied to a light source with sequential color illumination such as those shown in FIGS. 4A-6, according to an embodiment;
FIG. 13B illustrates the light output associated with the modulation power supplied in FIG. 13A;
FIG. 14A illustrates a waveform of a modulation power, voltage or current, supplied to a light source with sequential color illumination such as those shown in FIGS. 4A-6 implementing a variation of modulation power, voltage or current from FIG. 13A;
FIG. 14B illustrates the light output associated with the modulation power supplied in FIG. 14A;
FIG. 15 illustrates an example of the illumination of a light valve with a ferroelectric liquid crystal-based spatial light modulator to improve light throughput, according to an embodiment;
FIG. 16 illustrates an example of the illumination of a light valve with a different spatial light modulator to improve light throughput, according to an embodiment;
FIG. 17 illustrates an example of the illumination of a light valve with a spatial light modulator and a color sequencer to improve light throughput and color balance, according to an embodiment;
FIG. 18A illustrates an example of the illumination of a light valve with a ferroelectric liquid crystal-based spatial light modulator and a color sequencer to improve light throughput and color balance, according to an embodiment;
FIG. 18B illustrates the light output associated with the modulation power supplied in FIG. 18A;
FIG. 19A illustrates an example of the illumination of a light valve with a ferroelectric liquid crystal-based spatial light modulator and a color sequencer to improve light throughput and color balance, according to an embodiment;
FIG. 19B illustrates the light output associated with the modulation power supplied in FIG. 19A; and
FIG. 20 illustrates a computer system, which may be implemented to perform some or all of the methods described herein.

### DETAILED DESCRIPTION OF THE INVENTION

For simplicity and illustrative purposes, the present invention is described by referring mainly to an exemplary embodiment thereof. In the following description, numerous specific details are set forth in order to provide a thorough understanding of the present invention. It will be apparent however, to one of ordinary skill in the art, that the present invention may be practiced without limitation to these specific details. In other instances, well known methods and structures have not been described in detail so as not to unnecessarily obscure the present invention.

The invention is based, in part, on the concept that a light source can be made to operate at an intensity in excess of its nominal power dissipation level in a controlled manner to generally cause the light output of the light source to relatively quickly reach a nominal light output level. That is, the modulation power, voltage or current, may be supplied to the light source in a manner to generally cause the light output of the light source to reach the nominal light output nearly at the beginning of the display period. Through implementation of various examples, the lag in reaching nominal light output levels found in conventional display devices may substantially be avoided. In this regard, the rendition of color balancing may be more accurate as compared with conventional display devices.

As will be discussed below, light valves including all types of spatial light modulators, for instance, ferroelectric liquid crystal-based spatial light modulators, may benefit from improved throughput and color balance using the method of illuminating the light valve described herein.

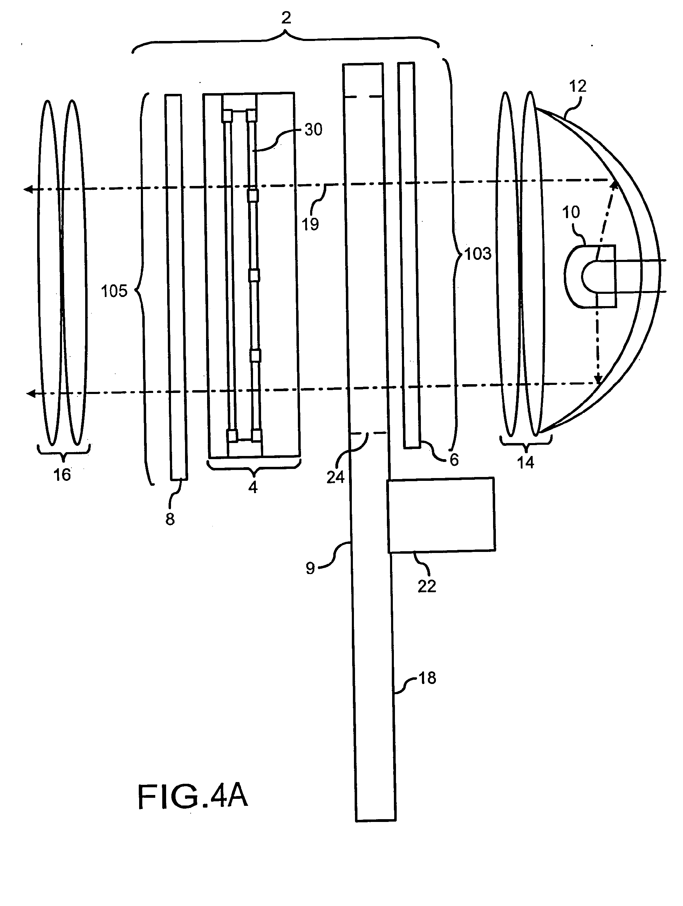

FIG. 4A shows part of a display device upon which illumination methods according to various embodiments may be performed, as described hereinbelow. The display device incorporates a transmissive light valve 2 including a single transmissive liquid crystal based spatial light modulator 4, upon which illumination methods according to various embodiments may be performed, as described hereinbelow. Other principal components of the display device are the polarizer 6, the analyzer 8, and the color sequencer 9. The light valve is illuminated with light from the "white" light source 10, the efficiency of which may be improved using a reflector 12 and collector optics 14 that concentrate the light towards the polarizer 6. The light output by the light valve passes to the output optics 16 that focus the light to form an image (not shown). The light valve, light source (including reflector and collector optics) and output optics may be incorporated into various types of display devices, including miniature, wearable devices, cathode-ray tube replacements, and projection displays.

Light generated by the light source 10 passes through the polarizer 6. The polarizer polarizes the light output from the light source. The polarized light is then transmitted to the color sequencer 9. The color sequencer, allows only a portion of the light in a particular color waveband to pass, filtering the remaining wavelengths of light.

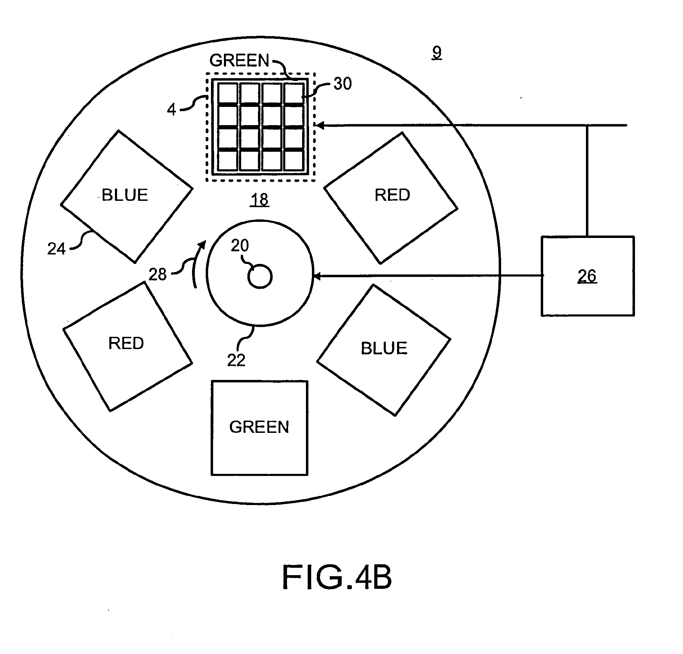

FIG. 4B is a front view of the particular type of color sequencer shown in FIG. 4A. This type of color sequencer 9 is a wheel 18 that can spin around a pivot 20 driven by a stepper motor 22. The wheel includes several filter windows 24 that allow only a particular waveband of light to pass, blocking the remaining light. Blue, Green and Red filer windows are depicted that allow only a blue, a green, or a red waveband of light, respectively, to pass. A color sequence controller 26 is connected to the stepper motor. The controller 26 directs the stepper motor to rotate the wheel around the pivot in the direction indicated by arrow 28, to stop the wheel when the next window 24 is aligned with the spatial light modulator 4, and to begin rotation again after a given period of time has elapsed. Thus, the spatial light modulator is illuminated sequentially with polarized light that is in a blue waveband, a green waveband, and a red waveband.

The color sequencer 9 has also been known to be rotated at constant speeds. In this regard, light sequentially passes through the color sequencer 9 as it rotates. The rotation of the color sequencer 9 at constant speeds is generally less expensive and less difficult to implement than the step and stop operations described hereinabove.

The spatial light modulator 4 is divided into a two-dimensional array of picture elements (pixels) in an array 30 that define the spatial resolution of the light valve. The direction of an electric field in each pixel of the spatial light modulator 12 determines whether or not the direction of polarization of the light reflected by the pixel is rotated by 90° relative to the direction of polarization of the incident light. A substantially reduced number of pixels in the array 30 are shown to simplify the drawing. For example, in a light valve for use in a large-screen computer monitor, the light modulator could be divided into a two-dimensional array of 1600x1200 pixels.

Referring back to FIG. 4A, the light transmitted by each pixel in the array 30 of the spatial light modulator passes to the analyzer 8 and is output from the light valve 2 depending on whether or not its direction of polarization was rotated by the spatial light modulator. The light output from the light valve 2 passes to the output optics 16 to form an image (not shown). This image will consist of green pixels if the color sequencer 9 is in the position shown in FIG. 4B. The following two images output by the light valve 2 will consist of blue pixels and red pixels, respectively. If these images occur quickly enough in sequence, a viewer will see what appears to be a full color image.

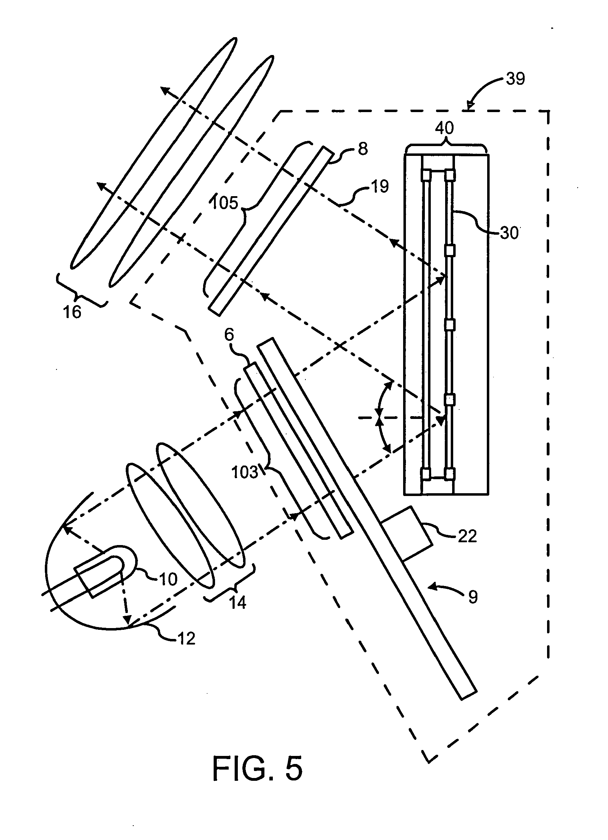

FIG. 5 depicts part of a display device upon which illumination methods according to various embodiments may be performed, as described hereinbelow. The display device depicted in FIG. 5 incorporates a reflective light valve 39 including a single reflective spatial light modulator 40, upon which illumination methods according to various embodiments may be performed, as described hereinbelow. It is noted that throughout the following description, elements that are identical to elements previously described are indicated by like reference numerals and will not be described again. The reflective light valve 39 operates in essentially the same manner as the transmissive light valve 2, except that the light transmitted by the color sequencer 9 is reflected by the spatial light modulator 40 rather than being transmitted through it. The reflective spatial light modulator 40 is similar to the previously described transmissive spatial light modulator 4 inasmuch as it is divided into a two-dimensional array of picture elements (pixels) 30 that define the spatial resolution of the light valve 39. In addition, the direction of an electric field in each pixel of the reflective spatial light modulator 40 determines whether or not the direction of polarization of the light reflected by the spatial light modulator 40 at that pixel is rotated by 90° relative to the direction of polarization of the incident light.

In the configuration depicted in FIG. 5, the reflective light valve 39 is configured with the light from the light source 10 illuminating the reflective spatial light modulator 40 at an incident angle ϕ from the perpendicular. The light reflected from the spatial light modulator is also reflected at an angle ϕ from the perpendicular in a direction opposite that of the incident light. Thus, the angle between the light illuminating the spatial light modulator and the light reflected from the spatial light modulator is equal to 2ϕ. This angle allows the light reflected from the spatial light modulator 40 to transmit unobstructed to the analyzer 8 and allows for a compact overall design.

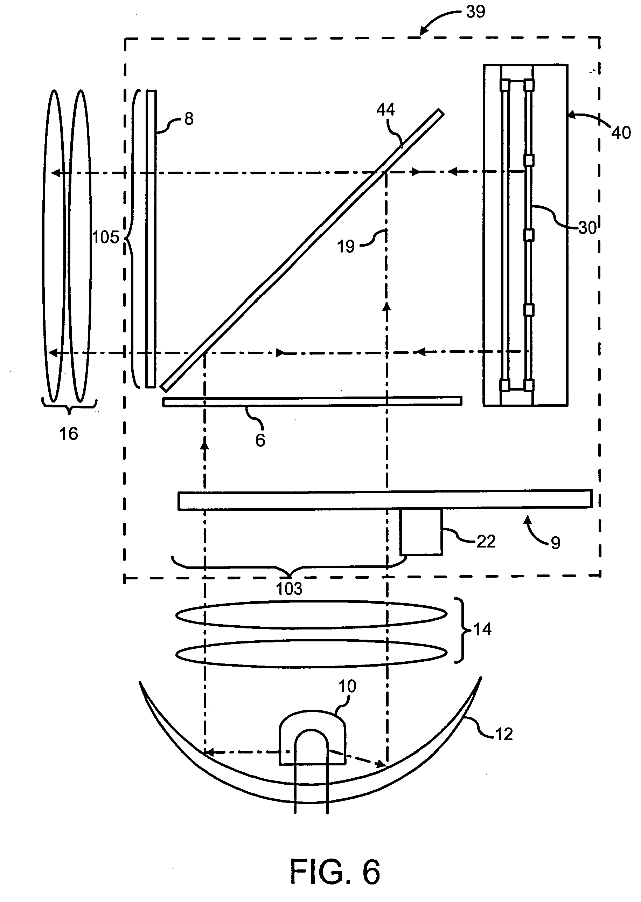

FIG. 6 depicts part of another display device upon which illumination methods according to various embodiments may be performed, as described hereinbelow. The display device shown in FIG. 6, like the display device shown in FIG. 5, incorporates a reflective light valve 39 including a single reflective spatial light modulator 40. This display device is distinct from those previously described inasmuch as it utilizes a beam splitter 44. The beam splitter reflects the light from the light source 10 towards the reflective spatial light modulator 40 after it has been polarized by polarizer 6. At the same time, the beam splitter functions to transmit the light reflected from the reflective spatial light modulator towards the analyzer 8. Alternatively, the components could be rearranged (not shown) so that the beam splitter transmits light from the light source towards the reflective spatial light modulator while reflecting the light reflected from the spatial light modulator towards the analyzer.

Using a beam splitter in the manner described offers the advantage that the spatial light modulator 40 can be illuminated from, and reflect light along a path perpendicular to the spatial light modulator. This eliminates any distortion that may result from illuminating the reflective spatial light modulator from an angle ϕ as shown in FIG. 5.

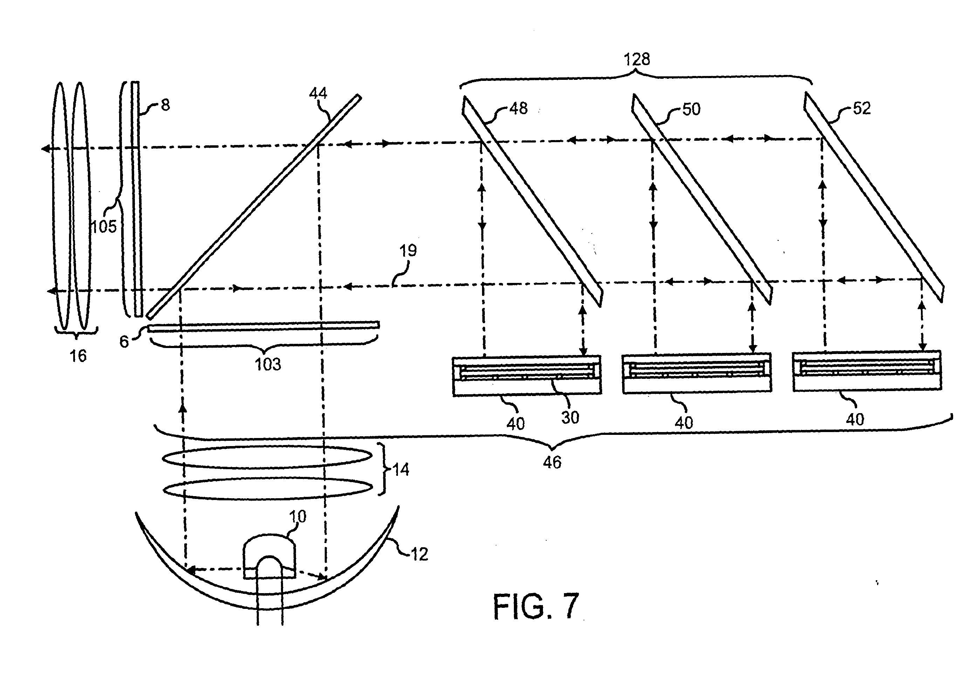

FIGS. 7-9 each depict part of a display device upon which illumination methods according to various embodiments may be performed, as described hereinbelow. The display device depicted in FIGS. 7-9 incorporate a triple reflective light valve 46 that includes three reflective liquid crystal-based spatial light modulators 40. Each of the triple reflective light valves depicted operates in a similar manner to the display devices previously described. First, the light valve 46 is illuminated with light from the "white" light source 10, the efficiency of which may be improved using a reflector 12 and collector optics 14 that concentrate the light towards the polarizer 6. The polarized light is then reflected by the beam splitter 44 towards a color separator.

In FIG. 7, the color separator is a series of three dichroic plates 48, 50, and 52, each having an associated reflective spatial light modulator 40. Each of the dichroic plates is configured to reflect light in a band of wavelengths (colorband) particular to that dichroic plate and to pass the remaining wavelengths of light. Thus, a particular portion of the color spectrum from the light generated by the "white" light source 10 may be reflected by each dichroic plate towards its associated reflective spatial light modulator 40 simultaneously. This eliminates the need for the previously described sequential illumination, and improves the perceived brightness of the color pixels passing through the analyzer 8.

For example, the dichroic plate 48 nearest the beam splitter 44 might reflect red-colored light toward its associated spatial light modulator 40 while the center dichroic plate 50 reflects green-colored light toward its associated spatial light modulator and the remote dichroic plate 52 farthest from the beam splitter reflects blue-colored light towards its spatial light modulator. When the light source 10 is ON, as shown, the colored light reflected by the dichroic plates passes to each of the three reflective spatial light modulators 40. Each of the three reflective spatial light modulators is capable of reflecting pixels of the colored light back at its associated dichroic plate in a manner consistent with the above description of the operation of the reflective spatial light modulator.

The pixellated light reflected by each of the spatial light modulators 40 will consist entirely of wavelengths in the colorband first reflected by the associated dichroic plate. Thus, the vast majority of the pixellated light reflected by each spatial light modulator 40 will be reflected by its associated dichroic plate 48, 50, 52 back toward the beam splitter 44. The beam splitter transmits this pixellated light towards the analyzer 8 and is output from the light valve 46 depending on whether or not its direction of polarization was rotated by the spatial light modulator. The light output from the light valve 46 passes to the output optics 16 to form an image (not shown). This image will be a color image consisting of a combination of the red, blue and green colored pixels from all three spatial light modulators that pass through the analyzer.

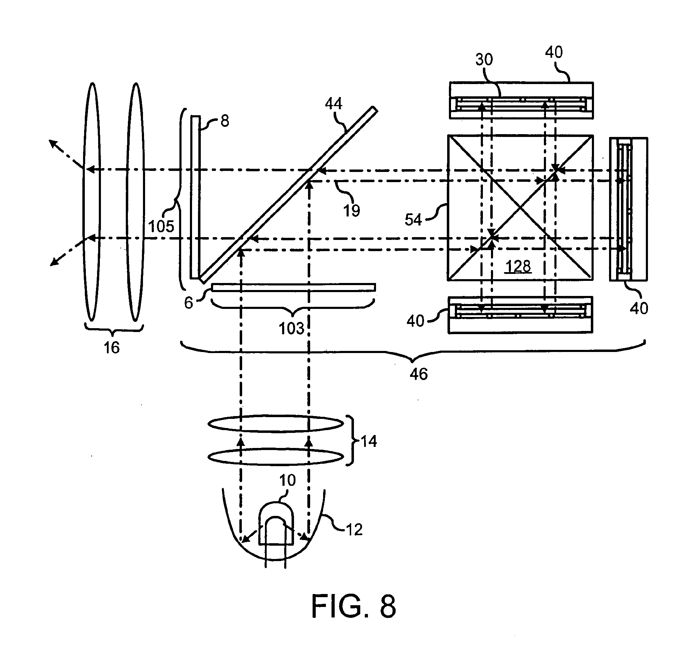

In FIG. 8 the color separator is a color separation cube 54, sometimes known as an x-cube or crossed-dichroic cube. As with the three dichroic plates depicted in FIG. 7, the color separation cube separates three distinct colorbands from the "white" light created by light source 10 and directs each of the colorbands to a particular spatial light modulator 40. The color separation cube 54 also recombines the light reflected from each of the spatial light modulators 40 and directs the combined light toward the analyzer beam splitter 44. The use of a color separation cube allows for a more compact design utilizing three spatial light modulators than can be achieved using three separate dichroic plates 48, 50, 52.

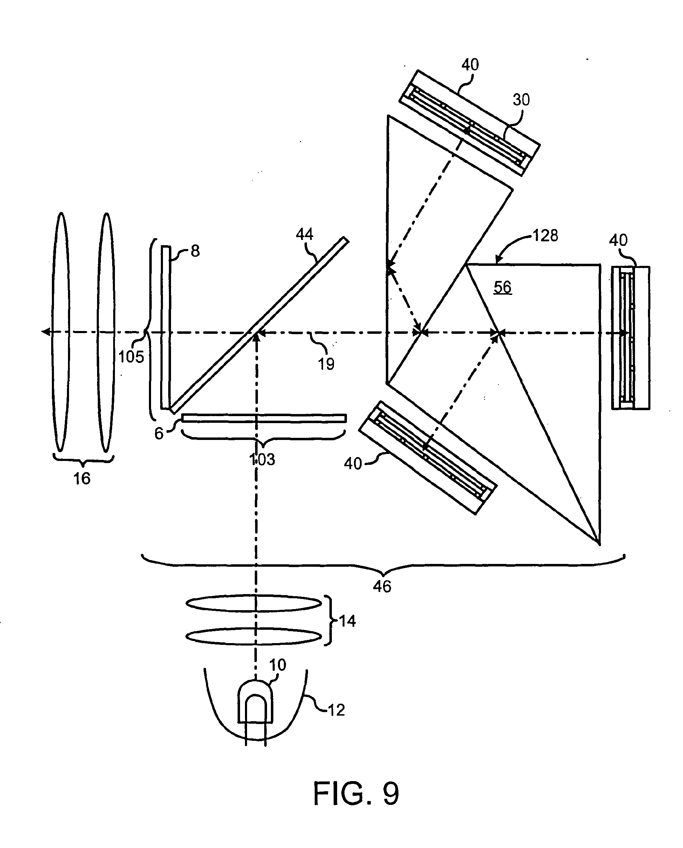

In FIG. 9, the color separator is a three-prism color separator 56 (sometimes known as a Philips cube or Philips prism). The design and use of a three-prism color separator is described in detail in U.S. Pat. No. 5,644,432, the contents of which are incorporated herein by reference. Like the previously described color separators, the three-prism color separator separates three distinct colorbands from the "white" light created by light source 10 and directs each of the colorbands to a particular spatial light modulator 40. The three-prism color separator 56 also recombines the light reflected from each of the spatial light modulators 40 and directs the combined light toward the beam splitter 44. The three-prism color separator has the advantage over the three dichroic plates 48, 50, 52 and the color separation cube 54 since it typically does a better job of recombining the reflected light from each of the spatial light modulators into a single color image.

In each of the previously described light valves, maintaining an appropriate balance between each of the three color (red, blue and green) pixellated images is critical to the accurate reproduction of colors in the displayed image. The task of maintaining an appropriate color balance can be a difficult problem since many "white" light sources are inherently unbalanced and the characteristics of the light they produce can change over time. For example, some types of arc-lamp produce far more green light than they do red or blue light at a given "white" light intensity level. The relative level of green, blue and red light generated by a "white" light source can also change with operating conditions including items such as operating temperature, operating voltage, age of the light source, contamination, etc.

One technique, which has been used to compensate for the unbalanced "white" light source, is to attenuate the modulation of the spatial light modulator illuminated with the highest intensity color. Thus, in a single spatial light modulator system with high intensity green light relative to the blue and red, the spatial light modulator attenuates the modulation of the green light. This is done by temporally modulating the light transmitted/reflected by each pixel such that the duration of the 0 state relative to the duration of the illumination period is extended to reduce the apparent brightness of the pixel. A similar technique can be used with the green illuminated spatial light modulator in a three spatial light modulator system.

Reducing the intensity of the higher intensity colored light at the light output by attenuating the spatial light modulator has the disadvantage that it reduces the throughput of the light valve and reduces the color resolution of the light valve. For example, if the intensity of the green component of the "white" light is twice that of the red and blue components, and a spatial light modulator is normally capable of producing 256 grayscale levels during an illumination period, 128 grayscale levels will be used to attenuate the green light. This will effectively reduce to 128 the number of grayscale levels that can be used to display the image.

One way to alleviate this problem is to add an attenuator for the green component or other color components. However, the use of attenuators generally results in significant reductions in light power.

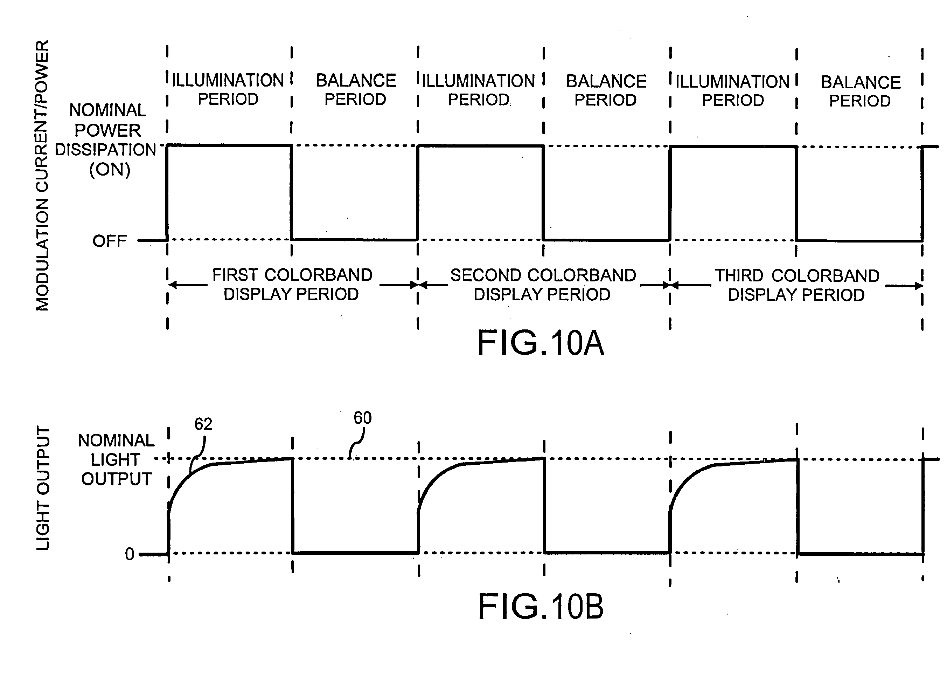

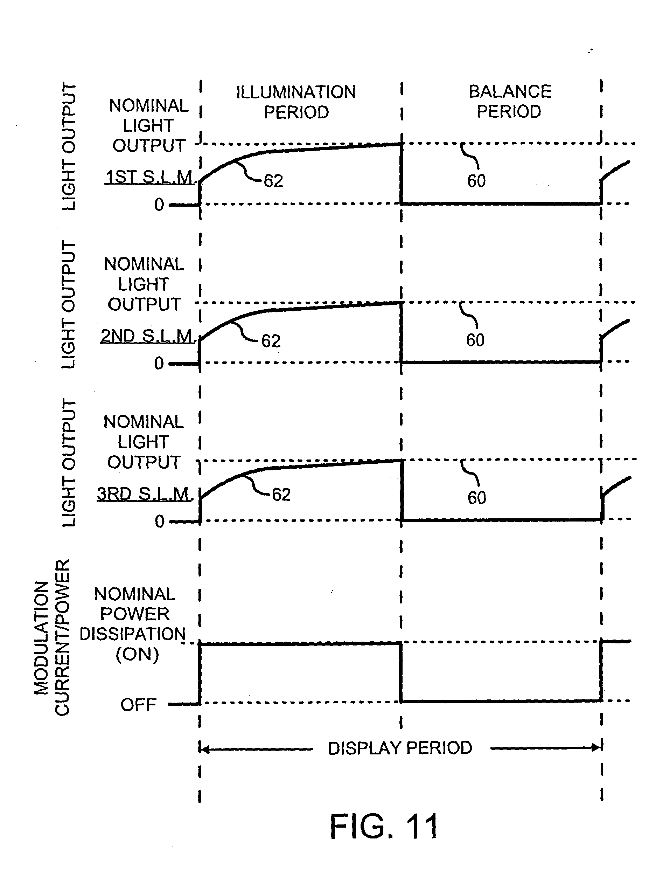

In each of the previously described light valves, the power, voltage or current, to perform the modulation is in the shape of top-hat waveforms as shown in FIG. 10A. A similar type of top-hat waveform is illustrated in FIG. 11 for configurations implementing three spatial light modulators (S.L.M.s). When the power is supplied to the light source 10, the light output of the light source lags the driving voltage or current as shown in FIGS. 10B and 11. More particularly, as depicted in FIGS. 10B and 11, the light outputs do not reach the nominal light output 60 immediately when the power is supplied to the light source. Instead, the light output gradually increases toward the nominal light outputs 60 as indicated by the curved sections 62. In some instances, the light outputs do not reach the nominal light output 60 before reaching the balance period. This lag in light outputs generally causes inaccurate color rendition as the light output is relatively lower than desired for a period of time during the display periods. Conventional attempts at compensating for the lag in light output rely upon signal processing techniques that are relatively complicated and which generally increase the costs associated with designing and operating the display devices.

In its most basic form, the method for illuminating a light valve provides for the illumination of a simple light valve that includes a single spatial light modulator. The first step of the method is providing the light valve. The light valve may be similar to the transmissive sequential color light valve 2 depicted in FIG. 4A or it may be similar to the reflective sequential color light valves 39 depicted in FIG. 5 or 6. Alternatively, the light valve may be a monochromatic light valve, in which case it may have a similar structure to the sequential color light valves 2, 39, but without the color sequencer 9. The light valve provided may include a light input 103, a light output 105, and a transmissive or reflective spatial light modulator 4, 40 having an array of pixels 30 with each pixel capable of modulating light traveling along an optical path 19 that intersects the pixel between the light input and the light output. While the spatial light modulator depicted is a ferroelectric liquid crystal-based spatial light modulator, other types of liquid crystal-based and non-liquid crystal-based spatial light modulators may be substituted.

The transmissive or reflective spatial light modulator 4, 40 is then illuminated through the light input 103 with light generated by a light source 10. The light source may be a "white" light source emitting light over a broad portion of the visible light spectrum. "White" light sources include incandescent, flourescent, and arc type light sources. The light source should have a nominal power dissipation level at which it can operate continuously over a relatively long period of time without damage. The light source may also be able to illuminate at a number of intensity levels between an "off" state and a "bright" state above the nominal power dissipation level. In addition, the light source may have a relatively rapid response time between the modulation of the light source control input (typically voltage or current levels) and the corresponding modulation of the intensity of the light generated by the light source.

Next, image data (not shown) is provided to the spatial light modulator. Image data is typically taken from digital or analog video signals and when used to drive a spatial light modulator is usually is either monochromatic (for example, providing a black & white, "grayscale" image) or a color component (usually blue, green or red) of a full color image. Typically, new image data will be provided at a "frame rate" of about 30 to 150 times per second. With color sequential light valves like those shown in FIGS. 4A, 5 and 6, however, the rate at which the individual color component data is sequentially provided is three times higher so all three color images may be shown sequentially while maintaining the full color "frame rate" of 30 to 150 full color images per second.

The array 3 0 of pixels of the spatial light modulator 4, 40 is then configured based on the image data. The light from the light source 10 is transmitted to output 105 through the configured light modulator array 30. This light output 105 is further transmitted through the projection optics 16 to form a faithful optical representation of the original optical image at some distance away (not shown).

The period of time during which the spatial light modulator is configured based on the image data before it reconfigures for new image data is called the "display period." Configuring the array 30 of pixels may be a "static" process in some types of spatial light modulators which use an "analog" modulation scheme, such as those based on nematic liquid crystals. In the analog modulation scheme each pixel is set to a condition that allows some fraction of the light received by that pixel from the light input 103 to reach the light output 105. In these types of spatial light modulators the array 30 of pixels is not reset to a new condition until new image data is received.

Other spatial light modulators, including ferroelectric liquid crystal-based spatial light modulators and TEXAS IINSTRUMENTS' Digital Light Processing™ (DLP™), however, use a "digital" modulation scheme. In the digital modulation scheme each pixel can be set to either a 1 state, in which light received by the pixel 30 from the light input 103 reaches the light output 105, or a 0 state, in which light received by the pixel from the input does not reach the light output. Each pixel is "dynamically" configured to temporally modulate between a 1 state and a 0 state in order to allow some fraction of the light received by the pixel from the light input to reach the light output.

In addition, when the spatial light modulator is ferroelectric liquid crystal-based, the step of configuring the pixels during a display period includes restoring the DC balance of the spatial light modulator. This is usually done by temporally modulating the pixel between the 1 state and the 0 state based on the image data for half the display period (illumination portion), and then reversing the ratio of the 1 state to the 0 state for a second half of the display period (balance portion). As a result, a positive representation of the image data is formed in light from the light source 10 received at the light output 105 during the illumination period, and a reverse representation of the image data is formed during the balance portion. This would result in a uniformly gray image at the light output if the illumination from the light source 10 was not modulated.

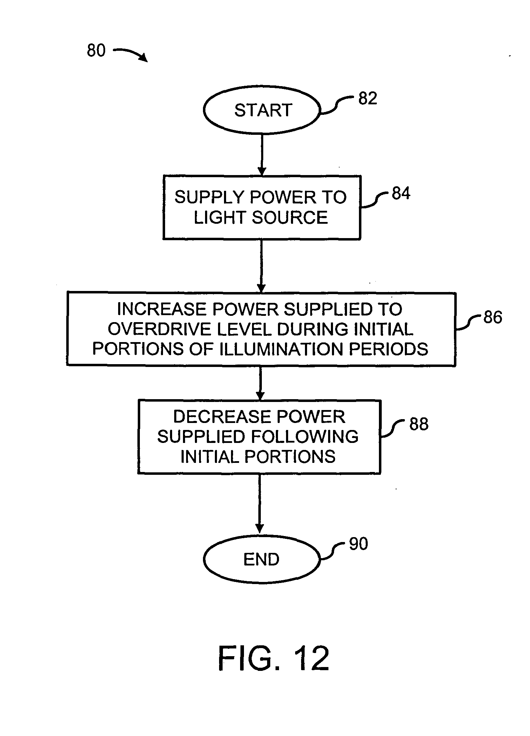

With reference to FIG. 12, there is shown a flow diagram of an operational mode 80 for illuminating a light valve in one colorband display period to increase the intensity of the light source 10 and maintain a substantially uniform light output throughout the colorband period. It is to be understood that the following description of the operational mode 80 is but one manner of a variety of different manners in which the light valve may be operated. It should also be apparent to those of ordinary skill in the art that the operational mode 80 represents a generalized illustration and that other steps may be added or existing steps may be removed or modified without departing from a scope of the operational mode 80.

The light valve generally includes a light input, a light output, a special light modulator having an array of pixels, a color sequencer for sequentially selecting one of a first, a second, and a third colorband of light. In one regard, modulation power, voltage or current, may be supplied to the light source 10 to generally cause the light outputs or intensities during the illumination periods to reach the nominal output levels in relatively short periods of time as compared with conventional display devices.

The operational mode 80 may be initiated in response to a variety of stimuli at step 822. For example, the operational mode 80 may be initiated in response to receipt of image data. Once initiated, power may be supplied to the light source 10 as indicated at step 84. In addition, at step 86, the power supplied to the light source 10 is increased to a level above the nominal power dissipation level during initial portions of the illumination periods. Moreover, the power supplied to the light source is decreased following the initial portion of each colorband period in the illumination period, as indicated at step 88. The operational mode 90 may end at step 90 when, for instance, the entire image data has been displayed. The operational mode 80 may also be repeated for subsequent illumination periods or in response to receipt of new image data.

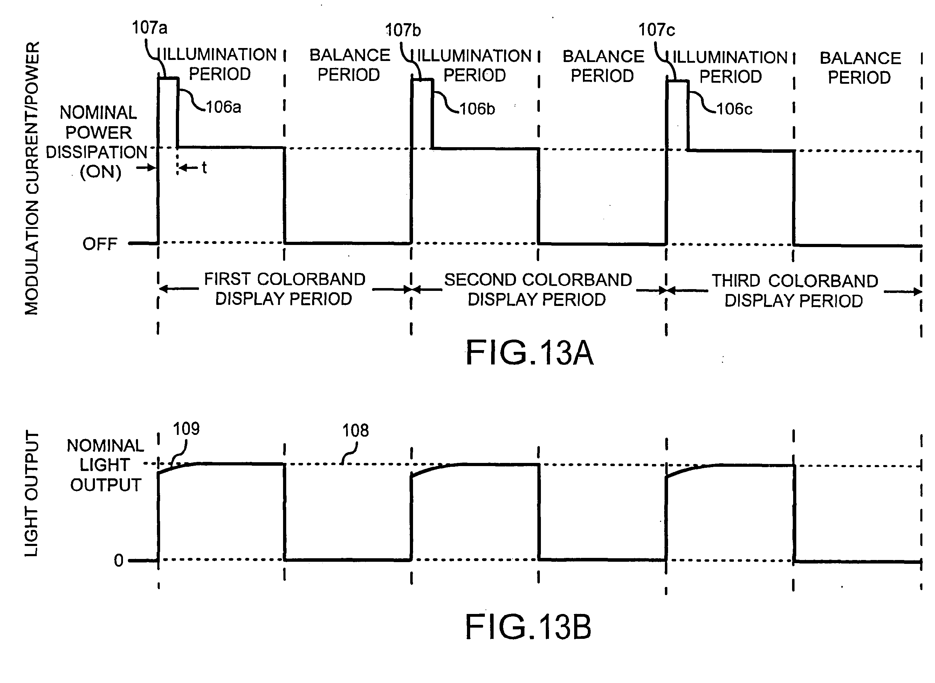

The steps outlined in FIG. 12 are described in greater detail with respect to the following figures. For instance, FIG. 13A depicts a waveform of a modulation power, voltage or current, supplied to a light source with sequential color illumination such as those shown in FIGS. 4A-6. As illustrated in FIG. 13A, the increased power levels are supplied during initial portions of the different colorband illumination periods.

With further reference to FIG. 13A, there is graphically illustrated the waveform that corresponds to the increased modulation power levels or overdrive portions 106a-106c. As shown in FIG. 13A, power is initially supplied to the light source 10 at an overdrive level 107a for a period of time (t) during the illumination period of the first colorband. In addition, power is supplied to the light source 10 at overdrive levels 107b and 107c for the time periods (t) of the second and third colorbands, respectively. The time periods (t) are depicted as being relatively shorter than the illumination periods for each of the colorbands. For each of the illumination periods, power is supplied at the nominal power dissipation level following the respective time periods (t).

The overdrive levels 107a-107c of power supplied during the overdrive portions 106a-106c may be selected to generally cause the light outputs of the light source 10 to reach the nominal light output level 108 in relatively shorter periods of time as compared with conventional display devices. In addition, the overdrive portions 106a-106c may have durations (time periods t) to also generally enable the light output to reach the nominal light output level 108 in relatively short periods of time. As shown in FIG. 13B, the light outputs for each of the colorbands reach the nominal light output level 108 at faster rates as compared with the light outputs depicted in FIG. 10B. More particularly, the curved section 109, which relates to a time period during the illumination period prior to the light output reaching the nominal light output level 108, is shorter and has a smaller slope as compared with the curved section 62 in FIG. 10B. As a result, the light outputs may be relatively uniform throughout the respective illumination periods. Consequently, greater accuracy in the rendition of color balancing through the power modulation technique depicted in FIG. 13A is achievable.

Although FIG. 13A illustrates the overdrive levels 107a-107c and the time periods (t) of the overdrive portions 106a-106c as being identical for each of the first, second and third colorbands, at least one of the overdrive levels 107a-107c and the time periods (t) may vary for one or more of the colorbands. Thus, for instance, the overdrive portion 106a of the first colorband may have at least one of a different overdrive level 107a and a time period (t) than that of the overdrive portion 106b or 106c of the second or third colorband. The characteristics of the overdrive portions 106a-106c for each of the colorbands may be determined according to, for instance, the spectral output of the light source 10. In any respect, the characteristics of the overdrive portions 106a-106c for each of the colorbands may be selected to achieve substantially uniform light outputs at desired levels.

The characteristics, that is, overdrive levels 107a-107c and time periods (t), of the overdrive portions 106a-106c may be preset by the manufacturer based on the characteristics of the spatial light modulator included with the light valve. Additionally, a color balance feedback system may be used to set or fine tune the characteristics of the overdrive portions 106a-106c. In a color balance feedback system, the actual intensity of each of the first, second, and third colorbands of light are measured, and based on these measurements, the characteristics of the power supplied to the light source 10 during each of the first, second, and third colorbands are adjusted in order to balance the intensities of the first, second, and third colorbands.

Further, the method may also be used to give color balance control to the user of the display in which the light valve is located. This may be accomplished by providing a color balance user interface which allows the user to select a desired color balance level. The color balance user interface may be any type of such user interfaces known in the art including one or more color balance knobs, digital on-screen control, or one or more up/down pushbutton type controls. The user's inputs received at the color balance user interface are then used to set the characteristics of the overdrive portions 106a-106c that provide the user with the desired color balance.

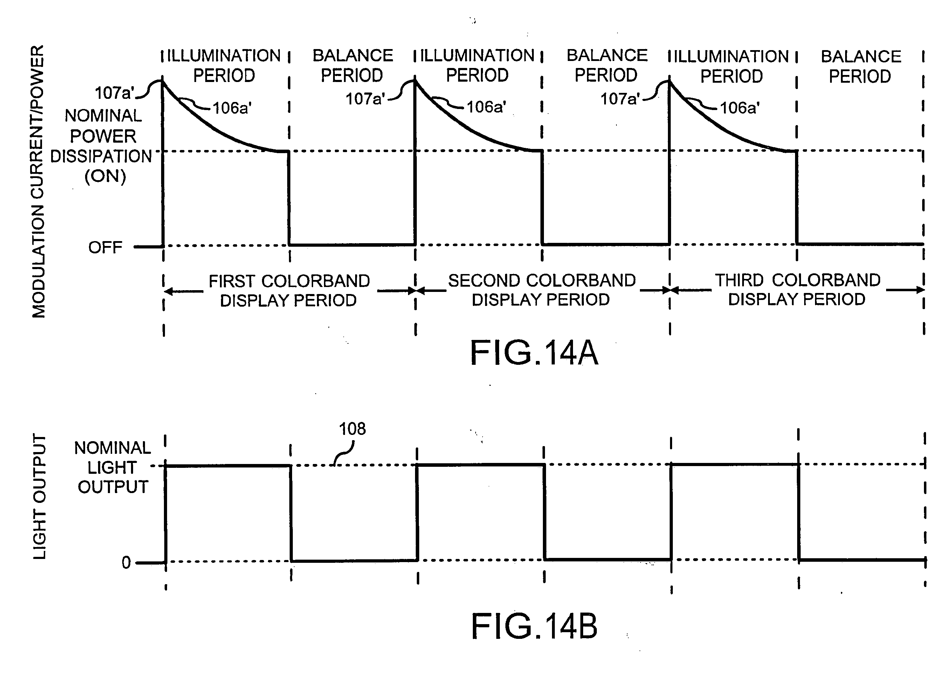

In another example, the overdrive portions 106a'-106c' may be sloped as shown in FIG. 14A. In this regard, similarly to the example above, the modulation power, voltage or current, is supplied to the light source 10 to generally cause the light outputs during each of the colorbands to reach the nominal output level in relatively shorter periods of time as compared with conventional display devices. In addition, the modulation power is supplied at varied rates during each of the illumination periods to generally cause the light outputs to substantially equal the nominal light output level 108 for the durations of the illumination periods. To achieve this result, the power supplied to the light source 10 is initially increased to an overdrive level 107a' above the nominal power dissipation level and is gradually decreased toward the nominal power dissipating level during a portion of the illumination period as illustrated in FIG. 14A.

FIG. 14A depicts a waveform of a modulation power, voltage or current, supplied to a light source with sequential color illumination such as those shown in FIGS. 4A-6, implementing a variation of modulation power, voltage or current. More particularly, FIG. 14A graphically illustrates the waveform that corresponds to the overdrive portions 106a'-106c'. As shown in FIG. 14A, power is initially supplied to the light source 10 at an overdrive level 107a', which exceeds the nominal power dissipation level, during the first colorband illumination period. In addition, power is supplied to the light source 10 at overdrive levels 107b' and 107c' during the initializations of the second and third colorbands, respectively. Following the initial power supply at the overdrive levels 107a'-107c', the power supplied to the light source 10 is respectively gradually decreased to the nominal power dissipation level.

The overdrive levels 107a'-107c' of power supplied during the overdrive portions 106a-106c may be selected to generally cause the light outputs of the light source 10 to reach the nominal light output level 108 in relatively shorter periods of time as compared with conventional display devices. In this regard, the overdrive levels 107a'-107c' may differ for one or more of the illumination periods of the colorbands. Thus, for instance, the overdrive level 107a' of the first colorband may differ from either or both of the overdrive levels 107b' and 107c' of the second and third colorbands. The overdrive levels 107a'-107c' for each of the colorbands may be determined according to, for instance, the spectral response of the light source 10. In any respect, the overdrive levels 107a'-107c' for each of the colorbands may be selected to achieve substantially uniform light outputs at desired levels.

The power supplied during the overdrive portions 106a'-106c' are illustrated as decreasing according to decay functions. That is, the slopes of the lines indicating the amount of power supplied gradually decreases along the illumination periods. The decay functions may comprise a formula, equation or a lookup table by which the light source 10 may be controlled to enable substantially uniform light outputs at desired levels. In addition, the decay functions for each of the overdrive portions 106a'-106c' may differ between one or more of the overdrive portions 106a'-106c'. The decay functions for each of the overdrive portions 106a' 106c' may be determined according to, for instance, the spectral output of the light source 10.

As shown in FIG. 14B, the light outputs for each of the colorbands reach the nominal light output level 108 at a faster rate as compared with the light outputs depicted in FIG. 10B. More particularly, the light outputs shown in FIG. 14B comprise top hat waveforms having substantially horizontal lines during the illumination periods. As a result, the light outputs may be relatively uniform throughout the respective illumination periods. Consequently, greater accuracy in the rendition of color balancing through the power modulation technique depicted in FIG. 14A is achievable.

The characteristics, that is, overdrive levels 107a'-107c' and decay functions, of the overdrive portions 106a'-106c' may be preset by the manufacturer based on the characteristics of the spatial light modulator included with the light valve. Additionally, a color balance feedback system may be used to set or fine tune the characteristics, i.e., overdrive levels 107a'-107c' and time periods (t), of the overdrive portions 106a'-106c'. In a color balance feedback system, the actual intensity of each of the first, second, and third colorbands of light are measured, and based on these measurements, the characteristics of the power supplied to the light source 10 during each of the first, second, and third colorbands are adjusted in order to balance the intensities of the first, second, and third colorbands.

Further, the method may also be used to give color balance control to the user of the display in which the light valve is located as described hereinabove.

Once these steps have been accomplished, new image data may be provided, and the method which has just been described may be repeated beginning with the step of providing image data.

Although particular reference has been made to the use of the overdrive portions 106a-106c in FIG. 13A and the overdrive portions 106a'-106c' in FIG. 14A, other configurations for the overdrive portions may be implemented. For instance, the overdrive portions may comprise constant slopes from the overdrive levels 107a-107c, 107a'-107c' to the nominal power dissipation levels. Alternatively, the overdrive portions may comprise substantially random-type modulation. That is, the overdrive portions may comprise configurations that do not follow a predefined manner of decay from the overdrive levels to the nominal power dissipation levels. In essence, therefore, the overdrive portions may be effectuated in any reasonably suitable manner that enables substantially constant light output levels throughout the illumination periods.

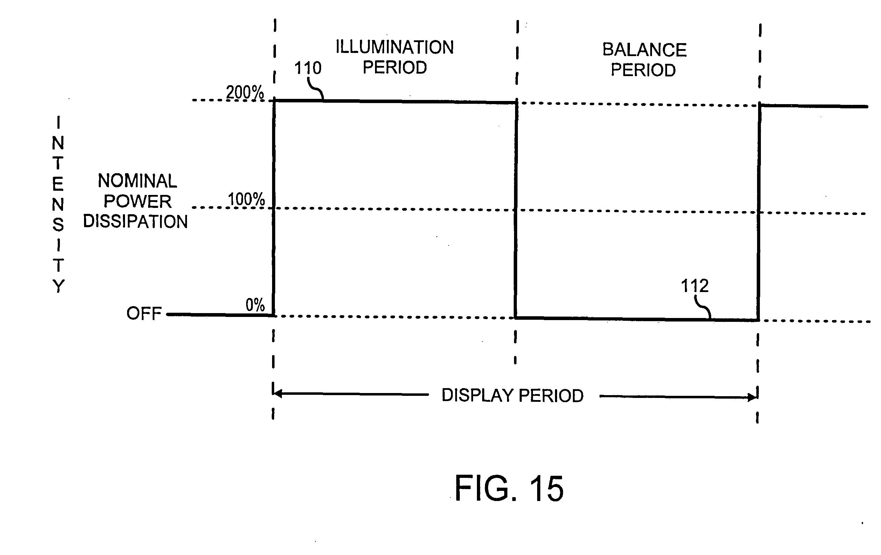

Referring now to FIG. 15, an example of the intensity of the light generated by the light source 10 during the display period is depicted. As shown, the intensity of the light is increased to a high level 110 above the nominal lamp power dissipation level for a portion of the display period and is also decreased to a low level 112 below the nominal power dissipation level for another portion of the display period. While the increase in intensity level to high level 110 occurs before the decrease in intensity level to low level 112 in FIG. 15, the order is not important and may be reversed. Further, while only a single longer high level 110 and a single longer low level 112 as shown in the display period, these could easily be replaced by numerous shorter high level 110 and low level 112 periods could take place during the display period.

In FIG. 15, the high and low levels are shown for a light valve that includes a ferroelectric liquid crystal-based spatial light modulator. Thus, the portion of the display period during which the intensity is increased to high level 110 substantially corresponds to the illumination period of the display period. In addition, the portion of the display period during which the intensity is decreased to low level 112 substantially corresponds to the balance period of the display period. Also, the high level 110 has a magnitude of approximately 200% of the nominal power dissipation level, and the low level 112 corresponds to an "off" condition of the light source.

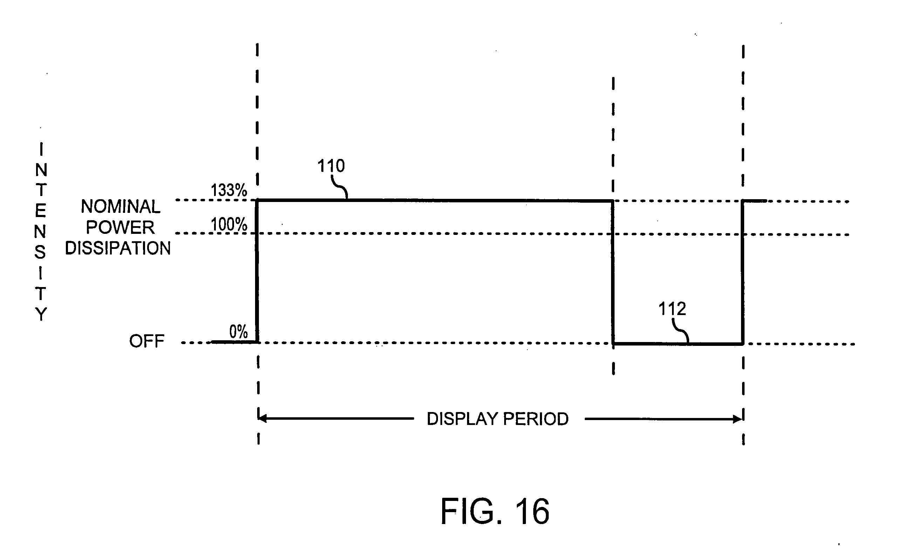

The method of illumination may be used with light valves including other types of spatial light modulators as well. In such a case, the relative duration of the high level 110 to the low level 112 during the display period, and the magnitude of high level 110 and low level 112 would be altered to provide the best light throughput for the characteristics of the spatial light modulator involved. For example, FIG. 16 illustrates the modulation of the intensity of light generated by a light source for a light valve including a spatial light modulator requiring a quarter of a display period to change configurations from the image data to new image data. Since it would be undesirable to illuminate such a light valve while it is changing configurations, light throughput may be improved. In this case the intensity of the light source is increased to a high level 110 for three-quarters of the display period and is decreased to a low level 112 for a duration corresponding to the configuration time for the spatial light modulator. Presuming the light source would be turned off when the intensity was decreased to the low level, the high level could be increased to a magnitude of approximately 133% of the nominal power dissipation level.

As an alternative to maximizing the light throughput of the light valve, the may also be used to give brightness control to the user of the display in which the light valve is located. This can be accomplished by providing a brightness user interface which allows the user to select a desired brightness level. The brightness user interface may be any type of such user interfaces known in the art including a brightness knob, digital on-screen control, or up/down pushbutton type controls. The user's inputs received at the brightness user interface are then used to set the high level 110 and/or the low level 112 at levels that provide the user with the desired brightness level.

Once these steps have been accomplished, new image data may be provided, and the method which has just been described may be repeated beginning with that step of providing image data.

The method of illuminating a light valve with a light source with modulated intensity may also be used with sequential color illumination type light valves like those shown in FIGS. 4A, 5, and 6 (including the color sequencer 9). These light valves operate with a single spatial light modulator 4, 40 which is sequentially illuminated with three or more colorbands of light (typically red, green, blue, etc.). Each of these colorbands of light is sequentially modulated and exit the light valve through the light output 105. When the sequence is fast enough, the viewer will perceive the three individual colorband images as a single full-color image. If a full-color frame rate of 60 frames/second is used, then each colorband must be displayed for a period of approximately 1/180 second.

When used with sequential color illumination light valves, the method of illuminating a light valve with a light source of modulated intensity begins by providing a light valve 2, 39. The light valve provided includes a light input 103, a light output 105, a spatial light modulator 4,40, and a color sequencer 9. The spatial light modulator has an array of pixels, each pixel 30 in the array of pixels is capable of modulating light traveling along an optical path 19 that intersects the pixel between the light input and the light output. The color sequencer sequentially selects one of a first, a second, a third colorband, and other colorbands of light that may reach the light output.

As before, the spatial light modulator is illuminated through the light input with light generated by a light source having a nominal lamp power dissipation level. The color sequencer is then set to allow the first colorband of light to pass towards the light output, and first colorband image data is provided to the spatial light modulator. The array of pixels is then configured based on the first colorband image data during a first colorband period so that the first colorband image data is represented in the first colorband light received at the light output. As previously described, configuring the array of pixels may include analog or digital configurations and may encode both positive and reverse representations of the first colorband image data, depending on the type of spatial light modulator included with the light valve.

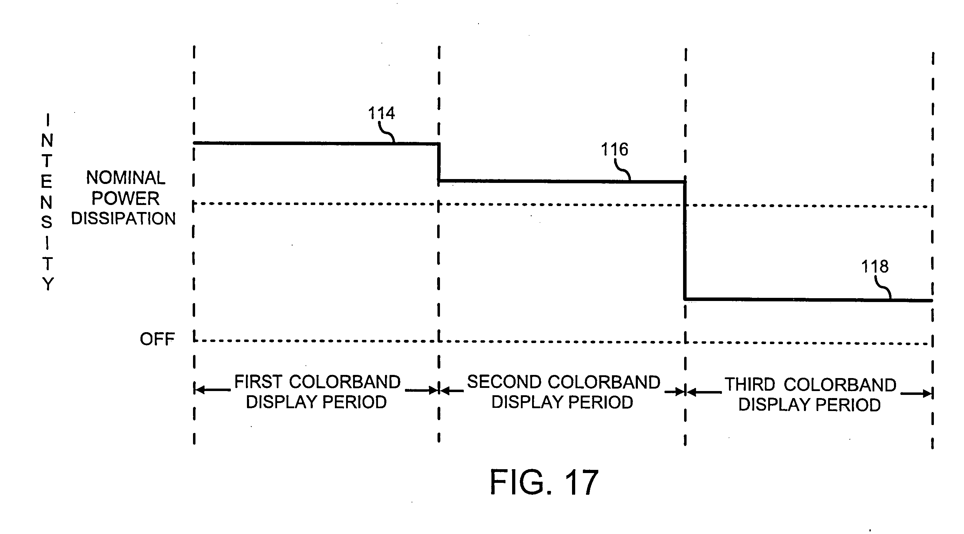

The intensity of the light generated by the light source during the first colorband period is then modulated. This modulation may include setting the intensity of the light generated by the light source 10 to a first high level 114 as shown in FIG. 17. This type of modulation may be used to improve color balance and throughput with light valves including spatial light modulators that do not require DC balancing.

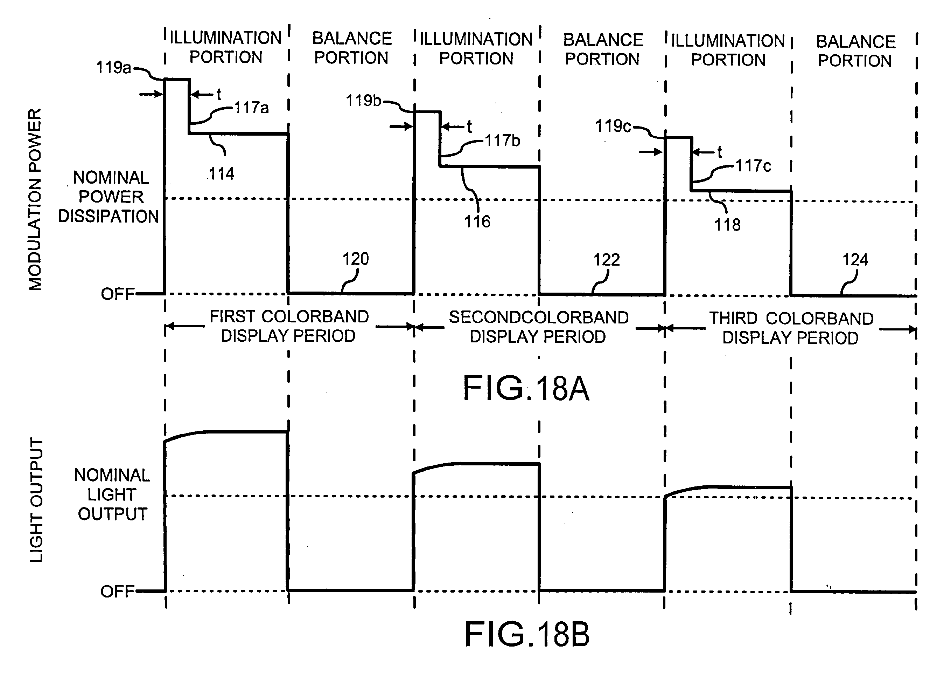

Alternatively, the modulation may include setting the intensity of the light generated by the light source to respective t high levels 114, 116, 118 during one portion of each of the colorband periods and setting the intensities of the light generated to first low levels 120, 122, 124 during another portion of the colorband periods as shown in FIG. 18A. This type of modulation may be used to improve color balance and throughput with light valves that include spatial light modulators that require DC balanced operation such as ferroelectric liquid crystal-based spatial light modulators. When the spatial light modulator is ferroelectric liquid crystal-based, the low levels 120, 122, 124 may be set approximately to the off level of the light source. As previously discussed, the order, relative duration, and frequency of the high levels 114, 116, 118 and the low levels 120, 122, 124 may be adjusted within the colorband periods to match the characteristics of other types of spatial light modulators.

The modulation of the intensity of the light generated by the light source in each of the first, the second, and the third colorband periods may be adjusted to adjust the color balance of the first, the second, and the third colorband of light at the light output. For example, the first, second, and third colorbands may be blue, red and green colorbands, respectively, and a particular light source may have a strong green colorband relative to the red and blue colorbands. Further, the red colorband may be stronger than the blue colorband.

In addition, according to another example, the modulation power, voltage or current, supplied to the light source 10 may be further manipulated to generally cause the light outputs or intensities during the illumination periods to reach desired output levels in relatively short periods of time as compared with conventional display devices. More particularly, the light source 10 may be supplied with modulation power in excess of the high levels 114-118 for periods of time (t) during the respective illumination portions as illustrated in FIG. 18A. FIG. 18A depicts that the increased power level beyond the high levels 114-118 is supplied during initial portions of the different colorband illumination periods.

FIG. 18A graphically illustrates an example of the waveform that corresponds to the increased modulation power levels or overdrive portions 117a-117c. As shown in FIG. 18A, power is initially supplied to the light source 10 at an overdrive level 119a for a period of time (t) during the illumination period of the first colorband. In addition, power is supplied to the light source 10 at overdrive levels 119b and 119c for the time periods (t) of the second and third colorbands, respectively. The time periods (t) are depicted as being relatively shorter than the illumination periods for each of the colorbands. For each of the illumination periods, power is supplied at the high levels 114-118 following the respective time periods (t).

The overdrive levels 119a-119c of power supplied during the overdrive portions 117a-117c may be selected to generally cause the light outputs of the light source 10 to reach desired light output levels in relatively shorter periods of time as compared with conventional display devices. In addition, the overdrive portions 117a-117c may have durations (time periods t) to also generally enable the light output to reach the desired light output levels in relatively short periods of time. As shown in FIG. 18B, the light outputs for each of the colorbands reach the desired light output levels at faster rates as compared with the light outputs depicted, for instance, in FIG. 10B. As a result, the light outputs may be relatively uniform throughout the respective illumination periods. Consequently, greater accuracy in the rendition of color balancing through the power modulation technique depicted in FIG. 18A is achievable.

Although FIG. 18A illustrates the overdrive levels 119a-119c and the time periods (t) of the overdrive portions 117a-117c as being identical for each of the first, second and third colorbands, at least one of the overdrive levels 119a-119c and the time periods (t) may vary for one or more of the colorbands. Thus, for instance, the overdrive portion 117a of the first colorband may have at least one of a different overdrive level 119a and a time period (t) than that of the overdrive portion 117b or 117c of the second or third colorband. The characteristics of the overdrive portions 117a-117c for each of the colorbands may be determined according to, for instance, the spectral response of the light source 10. In any respect, the characteristics of the overdrive portions 117a-117c for each of the colorbands may be selected to achieve substantially uniform light outputs at desired levels.

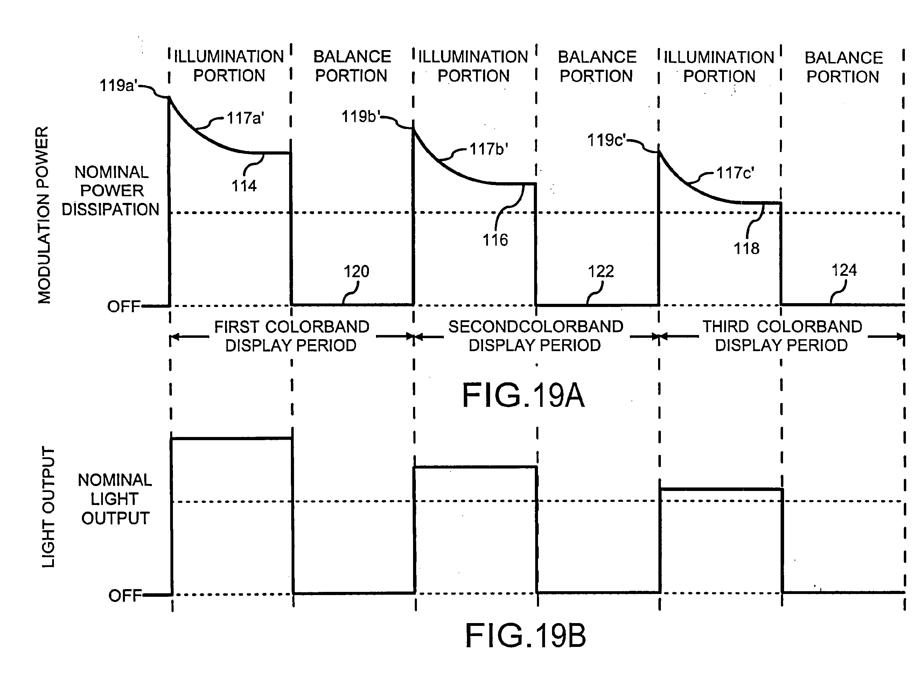

In another example, the overdrive portions 117a'-117c' may be sloped as shown in FIG. 19A. In this regard, similarly to the example above, the modulation power, voltage or current, is supplied to the light source 10 to generally cause the light outputs during each of the colorbands to reach desired output levels in relatively short periods of time as compared with conventional display devices. In addition, the modulation power is supplied at varied rates during each of the illumination periods to generally cause the light outputs to substantially equal the desired light output levels for the durations of the illumination periods. To achieve this result, the power supplied to the light source 10 is initially increased to respective overdrive levels 119a'-119c' above the high levels 114-118 and is gradually decreased toward the high levels 114-118 during a portion of the illumination period as illustrated in FIG. 19A.

FIG. 19A depicts a waveform of a modulation power, voltage or current, supplied to a light source with sequential color illumination such as those shown in FIGS. 4A-6. More particularly, FIG. 19A graphically illustrates the waveform that corresponds to the overdrive portions 117a'-117c'. As shown in FIG. 19A, power is initially supplied to the light source 10 at an overdrive level 119a', which exceeds the high level 114, during the first colorband illumination period. In addition, power is supplied to the light source 10 at overdrive levels 119b' and 119c' during the initializations of the second and third colorbands, respectively. Following the initial power supply at the overdrive levels 119a'-119c', the power supplied to the light source 10 is respectively gradually decreased to the high levels 114-118.

The overdrive levels 119a'-119c' of power supplied during the overdrive portions 117a'-117c' may be selected to generally cause the light outputs of the light source 10 to reach the desired light output levels in relatively shorter periods of time as compared with conventional display devices. In this regard, the overdrive levels 119a'-119c' may differ for one or more of the illumination periods of the colorbands. Thus, for instance, the overdrive level 119a' of the first colorband may differ from either or both of the overdrive levels 119b' and 119c' of the second and third colorbands. The overdrive levels 119a'-119c' for each of the colorbands may be determined according to, for instance, the spectral response of the light source 10. In any respect, the overdrive levels 119a'-119c' for each of the colorbands may be selected to achieve substantially uniform light outputs at desired levels.

The power supplied during the overdrive portions 117a'-117c' is illustrated as decreasing according to decay functions. That is, the slopes of the lines indicating the amount of power supplied gradually decreases along the illumination periods. The decay functions may comprise a formula or equation by which the light source 10 may be controlled to enable substantially uniform light outputs at desired levels. In addition, the decay functions for each of the overdrive portions 117a'-117c' may differ between one or more of the overdrive portions 117a'-117c'. The decay functions for each of the overdrive portions 117a'-117c' may be determined according to, for instance, the spectral output of the light source 10.

As shown in FIG. 19B, the light outputs for each of the colorbands reach the desired light output levels at faster rates as compared with the light outputs depicted in, for instance, FIG. 10B. More particularly, the light outputs shown in FIG. 19B comprise top-hat waveforms having substantially horizontal lines during the illumination periods. As a result, the light outputs may be relatively uniform throughout the respective illumination periods. Consequently, greater accuracy in the rendition of color balancing through the power modulation technique depicted in FIG. 19A is achievable.

In either of the examples above, the characteristics, that is, overdrive levels 119a-119c, 119a'-119c', time periods (t), and decay functions, of the overdrive portions 117a-117c, 117a'-117c' may be preset by the manufacturer based on the characteristics of the spatial light modulator included with the light valve. Additionally, a color balance feedback system may be used to set or fine tune the characteristics of the overdrive portions 117a-117c, 117a'-117c'. In a color balance feedback system, the actual intensity of each of the first, second, and third colorbands of light are measured, and based on these measurements, the characteristics of the power supplied to the light source 10 during each of the first, second, and third colorbands are adjusted in order to balance the intensities of the first, second, and third colorbands.

Further, the method may also be used to give color balance control to the user of the display in which the light valve is located. This can be accomplished by providing a color balance user interface which allows the user to select a desired color balance level. The color balance user interface may be any type of such user interfaces known in the art including one or more color balance knobs, digital on-screen control, or one or more up/down pushbutton type controls. The user's inputs received at the color balance user interface are then used to set the characteristics of the overdrive portions 117a-117c, 117a'-117c' that provide the user with the desired color balance.

Further, the method may also be used to give color balance control to the user of the display in which the light valve is located as described hereinabove.

Referring to FIGS. 17, 18A, and 19A, there is shown an example of the first colorband period, in which modulation of the weak blue colorband occurs. It should be appreciated that the following discussion relates to this particular type of lamp and that other types of lamps may include differing depictions of the colorband periods. In addition, it should be understood that the techniques presented herein are not limited to the particular type of lamp having a weak blue colorband as the first colorband period. As shown in FIGS. 17,18A and 19A, the first colorband includes modulation with a first high level 114 that is higher than the second or third high level. This highest high level offsets the weak blue colorband generated by the light source and equalizes the blue colorband relative to the red colorband and green colorband in at the light output. The second colorband period (during which modulation of the red colorband occurs) includes modulation with a second high level 116 that is higher that the third high level 118, but below the first high level 114. This second high level offsets the slightly weak red colorband generated by the light source and equalizes the red colorband relative to the blue and green colorbands at the light output. The third colorband period (during which modulation of the strong green colorband occurs) includes modulation with a third high level 118 that is the lowest of the high levels. This third high level offsets the strong green colorband generated by the light source and equalizes the green colorband relative to the blue and red colorbands at the light output.

The actual magnitude of each of the first, the second, and the third high level 114, 116, 118, may be preset by the manufacturer based on the characteristics of the spatial light modulator included with the light valve. Additionally, a color balance feedback system may be used to set or fine tune the magnitude of the first, second, and third high level. In a color balance feedback system, the actual intensity of each of the first, second, and third colorbands of light are measured, and based on these measurements, the magnitude of each of the first, second, and third high levels are adjusted in order to balance the intensity of the first, second, and third colorband of light.

Further, the method may also be used to give color balance control to the user of the display in which the light valve is located. This can be accomplished by providing a color balance user interface which allows the user to select a desired color balance level. The color balance user interface may be any type of such user interfaces known in the art including one or more color balance knobs, digital on-screen control, or one or more up/down pushbutton type controls. The user's inputs received at the color balance user interface are then used to set the first, second, and third high level 114, 116, 118 and/or the first, second, and third low level 120, 122, 124 at levels that provide the user with the desired color balance.

Once all three colorbands periods have elapsed, new first colorband image data may be provided and the process may repeat from that point forward.

Although particular reference has been made to the use of the overdrive portions 117a-117c in FIG. 18A and the overdrive portions 117a'-117c' in FIG. 19A, other configurations for the overdrive portions may be implemented. For instance, the overdrive portions may comprise constant slopes from the overdrive levels 119a-119c, 119a'-119c' to the high levels 114, 116, 118. Alternatively, the overdrive portions may comprise substantially random-type modulation. That is, the overdrive portions may comprise configurations that do not follow a predefined manner of decay from the overdrive levels to the high levels 114, 116, 118. in essence, therefore, the overdrive portions may be effectuated in any reasonably suitable manner that enables substantially constant light output levels throughout the illumination periods.

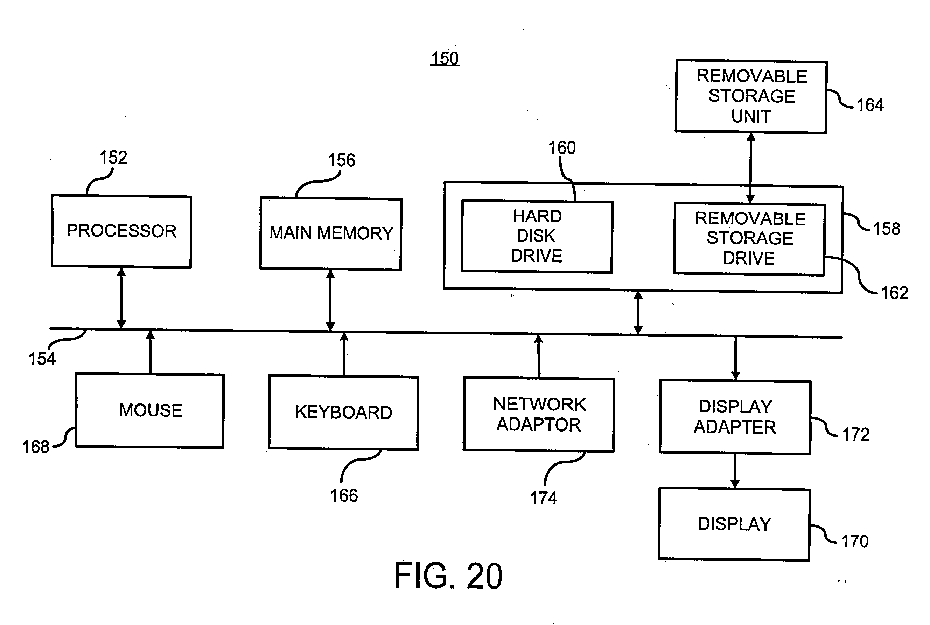

FIG. 20 illustrates a computer system 150, which may include, for example, a controller configured to control the operations of the display devices described hereinabove. The controller may comprise, for instance, a microprocessor, a micro-controller, an application specific integrated circuit (ASIC), and the like. In addition, the computer system 150 may be used as a platform for executing one or more of the functions described hereinabove.

The computer system 150 includes one or more controllers, such as a processor 152. The processor 152 may be used to execute some or all of the steps described hereinabove. Commands and data from the processor 152 are communicated over a communication bus 154. The computer system 150 also includes a main memory 156, such as a random access memory (RAM), where the program code for, for instance, the controller, may be executed during runtime, and a secondary memory 158. The secondary memory 158 includes, for example, one or more hard disk drives 160 and/or a removable storage drive 162, representing a floppy diskette drive, a magnetic tape drive, a compact disk drive, etc., where a copy of the program code for the display device may be stored.

The removable storage drive 160 reads from and/or writes to a removable storage unit 164 in a well-known manner. User input and output devices may include a keyboard 166, a mouse 168, and a display 170. A display adaptor 172 may interface with the communication bus 154 and the display 170 and may receive display data from the processor 152 and convert the display data into display commands for the display 170. In addition, the processor 152 may communicate over a network, for instance, the Internet, LAN, etc., through a network adaptor 174.

It will be apparent to one of ordinary skill in the art that other known electronic components may be added or substituted in the computer system 150. In addition, the computer system 150 may include a system board or blade used in a rack in a data center, a conventional "white box" server or computing device, etc. Also, one or more of the components in FIG. 20 may be optional (for instance, user input devices, secondary memory, etc.).

Although this disclosure describes illustrative embodiments of the invention in detail, it is to be understood that the invention is not limited to the precise embodiments described, and that various modifications may be practiced within the scope of the invention defined by the appended claims.

## Claims

1. A method (80) of illuminating a light valve (2, 39, 46) using a light source (10) having a nominal power dissipation level, the light valve (2, 39, 46) including a light input (103), a light output (105), a spatial light modulator (4, 40) having an array of pixels, a color sequencer (9) for sequentially selecting one of a first, a second, and a third colorband of light, the method comprising:
supplying (84) power to the light source (10) to generate light and illuminate the spatial light modulator (4, 40) through the light input (103);
during an initial portion of an illumination period of each colorband period, increasing (86) the power supplied to the light source (10) to an overdrive level (107a-107c, 107a'-107c' 119a-119c, 119a'-119c') above a nominal power dissipation level; and
decreasing (88) the power supplied to the light source (10) following the initial portion of each colorband period in the illumination period to thereby increase the intensity of the light source (10) during the initial portions of the illumination periods of each colorband period and maintain a substantially uniform light output throughout the colorband periods.

2. The method (80) according to claim 1, further comprising:
maintaining the power supply to the light source (10) for a period of time less than the entire illumination period of each colorband period.

3. The method (80) according to claim 2, wherein the step of maintaining the power supply for a period of time further comprises maintaining the power supply for a period of time to cause the light output (105) to reach the nominal output level in a minimal amount of time and to generate a uniform light output throughout the illumination period of each colorband period.

4. The method (80) according to any of claims 1-3, wherein the step of decreasing (88) the power supplied to the light source (10) comprises gradually decreasing the power supply to the light source (10).

5. The method (80) according to any of claims 1-3, wherein the step of decreasing (88) the power supplied to the light source (10) comprises decreasing the power supplied from the overdrive level (107a-107c, 107a'-107c' 119a-119c, 119a'-119c') to the nominal power dissipation level according to a function configured to maintain a substantially uniform light output throughout the colorband periods.

6. The method (80) according to any of claims 1-3, wherein the step of decreasing (88) the power supplied to the light source (10) comprises decreasing the power supplied from the overdrive level (107a-107c, 107a'-107c' 119a-119c, 119a'-119c') to a high level above the nominal power dissipation level according to a function configured to maintain a substantially uniform light output throughout the colorband periods.

7. A display device (FIGS. 4A, 4B, 5-9) comprising:
a light valve (2, 39, 46) comprising:
a light source (10) having nominal power dissipation level;
a light input (103);
a light output (105);
a spatial light modulator (4, 40) having an array of pixels;
a color sequencer (9) for sequentially selecting one of a first, a second, and a third colorband of light; and
a power source for supplying power to the light source (10), wherein the power supplied to the light source (10) is configured to be increased to an overdrive level (107a-107c, 107a'-107c' 119a-119c, 119a'-119c') above the nominal power dissipation level during an initial portion of an illumination period of each colorband period and wherein the power supplied to the light source (10) is configured to be decreased following the initial portion of each colorband period in the illumination period to thereby increase the intensity of the light source (10) during the initial portions of the illumination periods of each colorband period and maintain a substantially uniform light output throughout the colorband periods.

8. The display device (FIGS. 4A, 4B, 5-9) according to claim 7, wherein the power supplied to the light source (10) is configured to be gradually decreased from the overdrive level (107a-107c, 107a'-107c' 119a-119c, 119a'-119c') following the initial portion of each colorband period in the illumination period.

9. A system (FIGS. 4A, 4B, 5-9) of illuminating a light valve (2, 39, 46) using a light source (10) having a nominal power dissipation level, the light valve (2, 39, 46) including a light input (103), a light output (105), a spatial light modulator (4, 40) having an array of pixels, a color sequencer (9) for sequentially selecting one of a first, a second, and a third colorband of light, the system comprising:
means for supplying power to the light source (10) to generate light and illuminate the spatial light modulator (4, 40) through the light input (103);
means for increasing the power supplied to the light source (10) to an overdrive level (107a-107c, 107a'-107c' 119a-119c, 119a'-119c') above a nominal power dissipation level during an initial portion of an illumination period of each colorband period; and
means for decreasing the power supplied to the light source (10) following the initial portion of each colorband period in the illumination period to thereby increase the intensity of the light source (10) during the initial portions of the illumination periods of each colorband period and maintain a substantially uniform light output throughout the colorband periods.

10. The system (FIGS. 4A, 4B, 5-9) according to claim 9, wherein the means for decreasing comprises means for decreasing the power supplied to a high level above the nominal power dissipation level.
